# EUROPEAN PATENT APPLICATION

(11) **EP 1 862 887 A1**
(43) Date of publication of application: **05.12.2007**
(21) Application number: 06722069.9
(22) Date of filing: 17.03.2006
(51) Int. Cl.: G06F 3/023

(54) **CHINESE PHONETIC ALPHABET AND PHONETIC NOTATION INPUT METHOD FOR ENTERING MULTIWORD BY USING NUMERALS OF KEYPAD**

(30) Priority: 18.03.2005 CN 200510055346
(71) Applicant: Ma, Xianliang, Beijing 100028 (CN); Zhang, Yifang, Beijing 100028 (CN); Ke, Wen, Sanyuan Beijing, 100028 (CN)
(72) Inventor: Ma, Xianliang, Beijing 100028 (CN); Zhang, Yifang, Beijing 100028 (CN); Ke, Wen, Sanyuan Beijing, 100028 (CN)
(74) Representative: Wegener, Markus
(86) International application number: PCT/CN2006/000417
(87) International publication number: WO 2006/097052

(57) **Abstract**

The present invention provides a numeric coded Pinyin and Zhuyin multi-character input method on a reduced keypad, in which each Chinese phrase is mapped to corresponding numeric sequences based on full syllable or initial consonant of a syllable inputting rule and the keypad mapping relation, accordingly, phrases of different phonetic pronunciation may be mapped to a same numeric sequence; in the case of consecutively receiving a numeric keystroke sequence which represents of several desired Chinese characters but pronunciation still undetermined, a processor immediately searches the phrases' numeric sequences which are matched with keystroke sequence and present these mixed phrase candidates to user even though these candidates may have different pronunciation; further, an initial syllable grouping and cycling rule is specially defined, along with a key for switching between character candidate priority and phrase candidate priority, additionally, define an equal-length candidate filtering code keystroke, and a key for determining syllable by character and the like to accelerate the choice of candidate phrases and facilitate the realization of PC-like Chinese phrase consecutive inputting on the reduced keypad.

## Description

### FIELD OF INVENTION

The invention relates to a numeric coded Pinyin and Zhuyin multi-character Chinese input method on a reduced keypad, which is particularly applicable to consecutively input a plurality of Chinese character in the form of Pinyin or Zhuyin on mobile phone, remote control for TV set-top box, PDA, palm computer, electronic dictionary, remote control for audiovisual device, POS terminal, bar code reader or printer, tax-control POS, navigator, fixed telephone, fax or other keypad devices.

### BACKGROUND OF THE INVENTION

Currently, most of well-known Chinese phonetic input methods (include Pinyin and Zhuyin) on a PC keyboard employ multi-character consecutive input mechanism in the form of a phrase, a long phrase or a full sentence, with the aim to disambiguate one-level ambiguity from Pinyin or Zhuyin sequences to Chinese characters, i.e. the "phonetic-to-character ambiguity". Since Pinyin letters and Zhuyin symbols each correspond to a physical key on a PC keyboard, so, the interactive methodology between user and machine for phonetic input methods on a PC keyboard can be clearly designed such that letter keys are used for inputting Pinyin letters or Zhuyin symbols, Page Up and Page Down keys, numeric keys and/or Space key are successively used for choosing a multi-character phrase candidate or a single-character candidate corresponding to inputted Pinyin or Zhuyin sequence. Such multi-character consecutive input method enjoys a wide prevalence in mainland and Taiwan in China due to its conformity with the linguistic characteristic that there exist plenty of multi-character phrase in Chinese.

On a reduced keypad, for example, of a mobile phone, however, more than one Pinyin letters or Zhuyin symbols map to a single numeric key, and this gives rise to ambiguity between numeric string and Pinyin syllable string or Zhuyin syllable string, i.e. "numeric-to-phonetic Syllable". As an example, for a standard CCITT keypad, the numeric string "7426" corresponds to six possible Pinyin syllable strings, "pian", "piao", "qian", "qiao", "shan" and "shao", that is, it is logically necessary for Pinyin and Zhuyin input methods on a reduced keypad to disambiguate a "two-level ambiguity", that is, "numeric-to-phonetic syllable ambiguity" as the first level and "phonetic-to-character ambiguity" as the second level.

Most of existing Pinyin and Zhuyin input methods on mobile handsets take three forms of inputting, i.e. single-character inputting, single-character plus association inputting and inconsecutive multi-character inputting, of which detailed flows are described respectively as follows.

The flow for the single-character input method comprises steps: (1) inputting a numeric string; (2) if the numeric string corresponds to a plurality of Pinyin syllable or Zhuyin syllable, selecting one syllable by circular rolling or selecting so as to realize the confirmation from the numeric string to the phonetic syllable; (3) choosing one Chinese character corresponding to the confirmed syllable by way of page turning selection so as to realize the input of the single Chinese character; (4) repeating the steps (1) to (3) and completing the input of several Chinese characters.

The flow for the single-character plus association input method is that, following the step (3) in the single-character input flow, this input method gives several characters associated with the previous Chinese character, for example, if a user selects 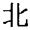 (Bei)", the associated characters can include " 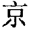 (Jing)", 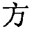 (Fang)", " 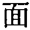 (Mian) " , " 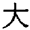 (Da)", etc.

A "single-character input method" and a "single-character plus association input method", each having the same flow as that mentioned above, are disclosed in Patent document "Chinese Character Input Method Used in Mobile Phone Terminal" (Application Number: CN99117062.8, Publication Number: CN1287461) by Huawei Technologies Co., Ltd. At present, the Chinese input method used in most marketed mobile phones is this single-character with association input method.

The above single-character and single-character plus association input methods are of lower intelligence and support only one character per input, so they are not consistent with the inherent characteristic of Chinese language, the keystroke operation is more complex when compared with the phrase input method used in PC.

There are two kinds of inconsecutive multi-character input methods on reduced keypad. The first one has a flow comprising steps of inputting the numeric string for a first Chinese character and choosing the syllable corresponding to the first character, inputting the numeric string for a second Chinese character and choosing the syllable corresponding to the second character, inputting the numeric string for a third Chinese character and choosing the syllable corresponding to the third character, and after such loop, choosing multi-character word or single-character word one by one to complete the input of several single characters. The drawback of the this input flow lies in that the procedure of inputting several numeric string sequences is interrupted by the frequent interaction for confirming a syllable.

The operation flow for the other inconsecutive phrase input method is mentioned in the Chinese version of "Nokia User Guide" for mobile phones "Nokia 3220" (model: RH-37) and "Nokia 6020" (model: RM-30) marketed in China in 2004 by Nokia company and comprises steps:
(1) Inputting the Pinyin for a first Chinese character in a phrase by pressing corresponding numeric keys;
(2) Inputting a Pinyin syllable delimiter by pressing key "0";
(3) Inputting the Pinyin for a second Chinese character;
(4) Repeating the steps (2) and (3) as required to input the Pinyin syllable or initial consonant of a syllable for all Chinese characters in the desired phrase;
(5) Repeatedly pressing key "*" as required to highlight and select the desired Pinyin combination;
(6) Pressing corresponding navigation keys to browse the list of candidate phrases and highlight the desired phrase, and then select and confirm it.

The flow of Nokia 3220 input method is mainly characterized in that, for a phrase, corresponding numeric keys are consecutively pressed to input the Pinyin string for each Chinese character in the phrase, key * are then repeatedly pressed to select a Pinyin syllable combination, and the Pinyin syllable combination must be selected before the selection of the desired phrase candidate. Although such flow overcomes some problems in the former multi-character input method, it leads to another problem, for example, assuming the numeric key sequence entered by a user is "9426 7426", there are four forms of Pinyin syllable, "xian xiao zhan zhao", corresponding to "9426" and six forms of Pinyin syllable, "qian qiao pian piao shan shao", corresponding to "7426", and thus there are at least 24 possible syllable combinations. Even more, if the sequence of "7426" is consecutively inputted for six times, i.e. "7426 7426 7426 7426 7426 7426", the number of possible combinations is 6^6=46656. With such huge number of possible combinations, the selection is not easy by pressing key "*".

Both of the above inconsecutive multi-character input methods require a user must select Pinyin or Zhuyin firstly, that is, the flow must confirm to the path of
pressing numeric key → (1) → selecting phonetic syllable → (2) → selecting phrase. Therefore, we seek to add the following path to the above flow:
pressing numeric key → (3) → selecting phrase.

Indeed, there exists great need for a multi-character input method on a reduced keypad, which should enable a friendly interaction between user and machine, a smooth input process and a PC-like phrase or long phrase inputting support.

### SUMMARY OF THE INVENTION

In order to simplify the complex operation due to the two-level ambiguity in phonetic input on a keypad, avoid the interruption arose from the interactive syllable-confirming in the inconsecutive multi-character input method, and fit a user's input habits and feelings on a PC keyboard as much as possible, the present invention provides a numeric coded Pinyin and Zhuyin multi-character input method on a reduced keypad, in which each Chinese phrase is mapped to corresponding numeric sequences based on full syllable or initial consonant of a syllable inputting rule and keypad mapping relation, accordingly, phrases of different phonetic pronunciation may be mapped to a same numeric sequence; in the case of consecutively receiving a numeric keystroke sequence which represents of several desired Chinese characters but pronunciation still undetermined, a processor immediately searches the phrases' numeric sequences which are matched with keystroke sequence and present these mixed phrase candidates to user even though these candidates may have different pronunciation; further, an initial syllable grouping and cycling rule is specially defined, along with a key for switching between character candidate priority and phrase candidate priority, additionally, define an equal-length candidate filtering keystroke code, and a key for determining syllable by character and the like to accelerate the choice of candidate phrases; furthermore, a user-defined phrase deletion key is defined to delete a user-defined phrase, and a set of small pictograms with visual emphasis is used to intuitively represent user keystrokes, and a mixed input status initial key is defined for switching to a mixed input status for capital-and-lower-case Western letters, digits and symbols.

### The present invention employs the following technical solution comprising:

Define a basic data set and term. All letters in Chinese Pinyin alphabet or all symbols in Chinese Zhuyin symbol table map to numeric keys on a many-to-single basis, and define syllables or initial consonant of a syllable without tone information as a syllable string. Based on the mapping relation, each syllable string maps to corresponding numeric string, and defines such numeric string as a "full numeric code" for a Chinese character. Accordingly, if a numeric string is only a prefix of a full numeric code instead of a full numeric code, define such numeric string as a "non-full numeric code". One numeric code is referred to as an "ambiguous numeric code" if it corresponds to more than one syllable strings. Based on the keypad mapping relation, every phrase in a phrase library is mapped to corresponding numeric sequences according to the inputting rule of full syllable or initial consonant of a syllable, and, accordingly, phrases of different phonetic pronunciation may map to a same numeric sequence. One syllable delimiter separates two syllable strings or two numeric codes, and refers the corresponding input key as a syllable delimiter key. The syllable delimiter can be inputted by a user or automatically added by means of software program after keystroke sequence is divided.

A presentation method of phrase candidate is specially designed. In the case of consecutively receiving a numeric keystroke sequence which represents of several desired Chinese characters but pronunciation still undetermined, a processor immediately searches the phrases' numeric sequences which are matched with keystroke sequence without the need for a user to choose or confirm a Pinyin letter string or a Zhuyin symbol string corresponding to any part of the user keystroke sequence. As long as a phrase's numeric sequence matches the user keystroke sequence, it is immediately regarded as a matched "phrase candidate". All phrase candidates are mixed together regardless of whether or not their pronunciation is the same, sorted according to the principle of phrase-length priority and usage frequency priority, and then presented in candidate list window on a page-by-page basis for choosing by the user.

An initial syllable grouping and cycling rule is specially defined for phrase candidates. For the mixed phrase candidates, the processor decomposes them into one or more "initial syllable candidate subgroups" in such a manner that, if the corresponding Pinyin letter string or Zhuyin symbol string of some candidates' first Chinese character are same at the time of input, these candidates are classified into one initial syllable candidate subgroup without considering whether its second or subsequent Chinese characters have the same pronunciation. Furthermore, a cycling key for initial syllable subgroup is specially defined, and once the cycling key is pressed, the candidate list is adjusted to next initial syllable candidate subgroup. In such cyclic fashion, user could rapidly adjust candidate list to certain initial syllable candidate subgroup, and thereby narrowing down and speeding up the selection.

A candidate-length subsegment switching method is specifically defined. The processor divides all candidates into two subsegments, "multi character phrase candidate subsegment" and "single character candidate subsegment", according to its number of the Chinese character. In the principle of phrase candidate priority, phrase candidate sub segment is presented in the front of candidate list window by default. The left direction key is specially defined as a key for switching between character candidate priority and phrase candidate priority in the interaction status of candidate selection. Once the left key is pressed, the candidate list window is switched to character candidate subsegment priority mode, that is, the single character candidate subsegment is presented in the front of candidate list window, and if the left key is pressed again, it is switched back to phrase candidate subsegment priority mode. In this way, the user can rapidly adjust the candidate presentation order between the two subsegments, and thus to narrow down and speed up the selection.

An equal-length candidate filtering code keystroke is specifically defined. Based on Chinese character's pronunciation characteristic, shape characteristic or the combination of pronunciation and shape characteristic, could define one or more sets of equal-length filtering codes, while use only one set of filtering code for narrow down candidates. Filtering codes for different Chinese characters have the same code length, the same number of corresponding keystrokes, which is two or three, and the same first corresponding key. Filtering codes are entered by the user to narrow the scope of candidates and therefore to narrow down and speed up the selection.

An automatic linkage rule between the hotspot candidate and corresponding Pinyin or Zhuyin string displayed in an input-and-edit window been provided. There exists and only exists one hotspot candidate in the candidate list window. If pronunciation still undetermined, the corresponding Pinyin or Zhuyin string displayed in the input-and-edit window should consistent with the pronunciation of the hotspot candidate. The alteration of the hotspot candidate in a candidate list window will result in automatic concatenated alteration of corresponding Pinyin or Zhuyin in an input-and-edit window.

A method for determining syllable by character is provided. A key for determining syllable by the first character in hotspot candidate is specifically defined, once the key is pressed, the processor rapidly adjusts the candidate list to an initial syllable candidate subgroup, which corresponds to the pronunciation of the first Chinese character in the hotspot candidate, and thereby narrowing down and speeding up the selection.

A method for deleting user-defined phrase is provided. A numeric key is specifically defined as user-defined phrase deletion key in the interaction status of candidate selection. Once the key is pressed, if the current hotspot candidate is a user-defined phrase, the processor will delete the phrase from the phrase library or memory.

A set of small pictograms with visual emphasis represents intuitively user keystrokes. Each of one or more keys of the reduced keypad is mapped to a plurality of Pinyin letters or Zhuyin symbols. When the user presses one numeric key corresponding to the syllable of a Chinese character, the processor presents on a display device one corresponding small pictogram with a visual emphasis part. The pictogram should depict at least two of numeral, Pinyin letters and Zhuyin symbols represented by the numeric key, and the visual emphasis part should be one Pinyin letter or one Zhuyin symbol corresponding to the numeric key, thus, the user keystroke can be intuitively denoted.

Non-full numeric code string been automatic supplemented. In input-and-edit status, if the numeric code string at the current caret point is only a prefix of a full numeric code instead of a full numeric code, the processor will automatically supplement the numeric string into a full numeric code sequence upon the departure from the current caret point.

The caret point been automatic shifted in the input-and-edit window after a candidate selection operation. In the case of receiving a numeric keystroke sequence, which represents of several desired Chinese characters, and at least one Pinyin or Zhuyin syllable left in input-and-edit window after a candidate selection operation, the processor will automatically shift the caret point to the back of the first phonetic syllable left in the input-and-edit window.

The corresponding syllable-confirming window been automatic displayed after a candidate selection operation. In the case of receiving a numeric keystroke sequence, which represents of several desired Chinese characters, and at least one Pinyin or Zhuyin syllable left after a candidate selection operation, the processor will automatically display a syllable-confirming window that contains syllable options corresponding to the prefix part of the remaining user keystroke sequence.

Consecutive numeric keystroke sequence having no syllable delimiter been automatic divided. Syllable delimiter keystroke is not required between two phonetic syllables. Having received such a numeric keystroke sequence, which represents of several desired Chinese characters containing no syllable delimiter, the processor enumerates all potential division paths from the sequence's beginning to the end according to the rule of Pinyin or Zhuyin syllable table, and then finds a division path having minimum path segments as an optional path.

If there are more than one division path having minimum path segments, and the length of each path segments of one division path are not completely equal to that of another path, the processor will select a preferred division path according to the length and the usage frequency of a phrase candidate corresponding to each path in such a way that, if the number of Chinese characters in the longest phrase candidate corresponding to a division path is greater than that of any other, the path is selected, and if these longest phrase candidate have the same number of Chinese characters, a path corresponding to a phrase with the highest usage frequency is selected.

Support to mixed input of capital-and-lower-case Western letters and words, number and symbols in Pinyin or Zhuyin input method status. When no numeric keystroke sequence representing any Pinyin or Zhuyin is inputted, define one numeric key as mixed input status initial key. Once the initial key is pressed, the input method enters directly into a mixed input auxiliary status in which capital-and-lower-case Western letters and words, numerals and symbols can be inputted, and automatically return to a Pinyin or Zhuyin input method primary status at the end of the above mixed inputting.

In the case of entering the mixed input auxiliary status without pressing any numeric key, Chinese punctuation is listed in a candidate window on a page-by-page basis such that a punctuation can be immediately chosen.

If a numeric keystroke is inputted after entering the mixed input auxiliary status, all the Western words corresponding to the numeric string are listed in the candidate window along with the numeral itself. The user can directly select one Western word or numeral from the candidate window.

A user defined Western string can be customized after entering the mixed input auxiliary status in such a manner that, user firstly enters a numeric string in the mixed input auxiliary status, lower and capital case Western letters, numerals and symbols corresponding to each key in the numeric string will be successively listed in the candidate window After choosing lower or capital case Western letters, numerals or symbols one by one to form a customized Western string, add the customized string to a user defined word library. Therefore, when the same numeric string is inputted in the mixed input auxiliary status again, the customized Western string will appear in the candidate window.

Further, the above mentioned cycling key for initial syllable subgroup is the same physical key as the input key for Pinyin or Zhuyin syllable delimiter.

There are three interaction statuses in the input method: interaction status of input-and-edit, interaction status of candidate selection and interaction status of syllable-confirming. After entering the numeric keystroke for one or more Chinese characters, the switching among three statuses is realized according to the following scheme:
(1) The key for switching from the interaction status of input-and-edit to the interaction status of syllable-confirming is one same direction key on a keypad as that for switching from the interaction status of candidate selection to the interaction status of syllable-confirming;
(2) In the interaction status of input-and-edit, two direction keys which opposite to each other are used to enter the interaction status of syllable-confirming and the interaction status of candidate selection, respectively;
(3) In both of the interaction status of syllable-confirming and the interaction status of candidate selection, define one same escape key to quit from above two statuses and return to input-and-edit interaction status.

### The present invention provides the following benefits:

Since phrases with possible different pronunciation are mixed together as candidates by matching numeric code and the user keystroke sequence for each phrase directly, a user can immediately choose the desired phrase without confirming the syllable string corresponding to the keystroke sequence. This helps realize multi-character consecutive inputting of a phrase and long phrase in Chinese Pinyin or Zhuyin form on a keypad, the inputting procedure will not be interrupted by frequent syllable-confirming interactions and the overall smoothness is improved;
By defining an initial syllable grouping and cycling rule, and a key for switching between character candidate priority and phrase candidate priority, plus an equal-length candidate filtering code keystroke and a key for determining syllable by character, the selection of candidate is accelerated and the convenience for inputting is enhanced;
By means of automatic division of consecutive numeric keystroke sequence having no syllable delimiter, small pictograms with visual emphasis representing intuitively user keystrokes, automatic shift the caret point in the input-and-edit window, and automatic display the corresponding syllable-confirming window after a candidate selection operation, the friendliness for interaction between user and machine is strengthened;
By defining a user-defined phrase deletion key and a mixed input status initial key, the integrality of input function is upgraded.

### BRIEF DESCRIPTION OF THE DRAWINGS

Fig. 1 shows inner components in a keypad device according to the present invention.
Fig. 2 is a perspective view for the keypad of Fig.1.
Fig. 3 is a schematic diagram for mixed phrase candidates corresponding to an inputted numeric keystroke sequence.
Fig. 4 is a schematic diagram for two basic styles of the inventive input method interface.
Fig.5 is a schematic diagram for consecutive input-and-edit interaction procedure.
Fig.6 is a schematic diagram for consecutive interaction procedure of candidate selection.
Fig.7 is a schematic diagram for interaction status switching.
Fig.8 is a schematic diagram for initial syllable grouping.
Fig.9 is a schematic diagram for automatic linkage rule between the hotspot candidate and corresponding syllable string.
Fig.10 is a schematic diagram for determining syllable by character.
Fig. 11 is a schematic diagram for candidate-length subsegment switching.
Fig.12 is a schematic diagram for automatic alteration the corresponding syllable-confirming window after a candidate selection operation.
Fig.13 is a schematic diagram for automatic shift the caret point in the input-and-edit window after a candidate selection operation.
Fig. 14 is a schematic diagram for candidate limitation by equal-length candidate filtering code keystroke.
Fig.15 is a schematic diagram for a mixed input auxiliary status.
Fig.16 is a schematic diagram for using small pictograms with visual emphasis to represent user keystrokes intuitively.
Fig.17 is a schematic diagram for user-defined phrase deletion.
Fig.18 is a schematic diagram for automatic supplementation of non-full numeric code.
Fig. 19 is a schematic diagram for automatic division of a consecutive numeric keystroke sequence having no syllable delimiter.

### DETAILED DESCRIPTION OF PREFERRED EMBODIMENTS

### I. Hardware structure

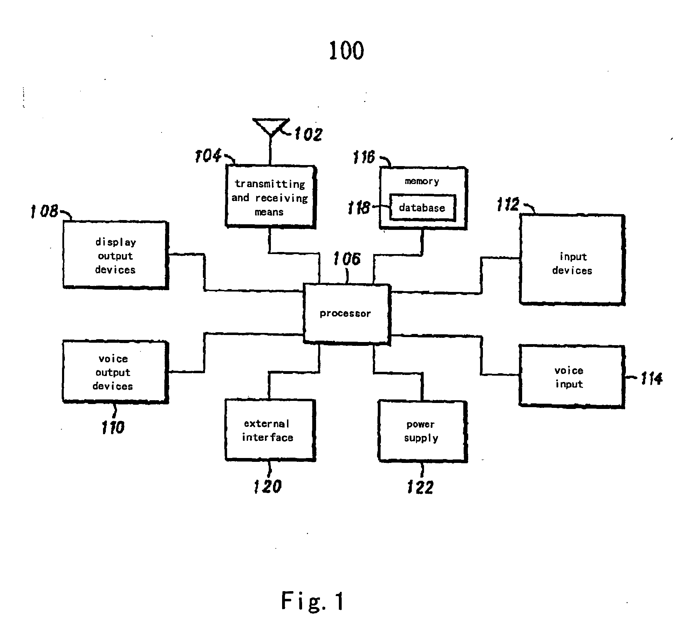

(I.a) the present invention relates to a numeric coded Pinyin and Zhuyin multi-character input method on a reduced keypad. Fig. **1** shows inner structure **100** in a reduced keypad device for which the preferred embodiment includes an antenna **102,** a transmitting and receiving means **104,** an external interface **120,** a power supply **122,** a processor **106,** output devices **108** and **110,** input devices **112** and **114** and a memory **116** storing various relevant data, some of which exists in the form of a database **118.**

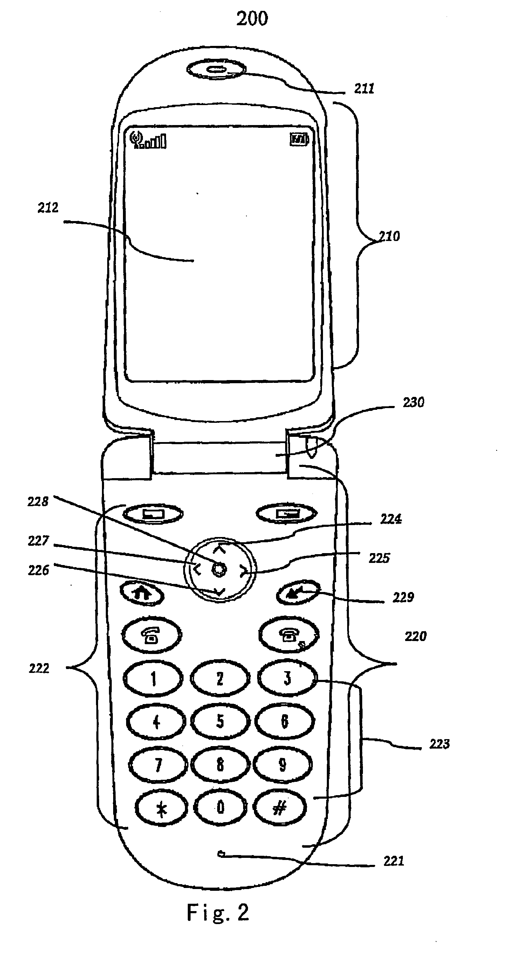

(I.b) Fig.**2** shows a perspective view for the keypad **200** device that has the above inner structure **100.** The keypad **200** comprises an upper part **210** and a lower part **220** connected to each other via a connecting part **230.** The upper part **210** includes a phone speaker **211** and a display output device **212,** and the lower part **220** includes a microphone **221** and a set of input key **222.** The preferred embodiment of the input keys **222** includes an up direction key **224,** a right direction key **225,** a down direction key **226,** a left direction key **227,** an OK key **228,** a C key **229** and a numeric key set **223** in which 0 key **230** or # key **231** is also used as a space key.

II. All letters in Chinese Pinyin or all symbols in Chinese Zhuyin symbol table are mapped to numeric keys of the keypad on a many-to-one basis, for example, the mapping between Pinyin alphabet and the keypad is that "2","3","4","5","6","7","8" and "9" correspond to Pinyin letters "abc", "def", "ghi", "jkl", "mno", "pqrs", "tuv" and "wxyz", respectively; the mapping between Zhuyin symbols and the keypad is "1 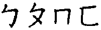 ", "2 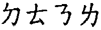 ", "3 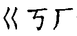 ", "4 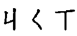 ", "5 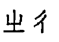 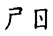 ", "6 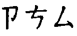 ", "7 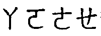 ", "8 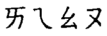 ", "9 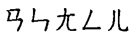 ", "0 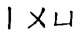 ". Take Pinyin as an example, the numeric code "7426" corresponds to six possible Pinyin syllable strings, "pian", "piao", "qian", "qiao", "shan" and "shao", so such numeric code string "7426" is referred to as "ambiguous numeric code". Further, the numeric code string "46" is not a full numeric code but only the prefix of a full numeric code "4662" corresponding to Pinyin strings of "gong" and "hong" and/or "468" corresponding to Pinyin strings of "gou" and "hou", and therefore referred to as "non-full numeric code". Generally, key "#" is defined as syllable delimiter input key. A Chinese phrase maps to one or more corresponding numeric code sequences. More specifically, take the phrase " 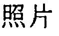 Zhao Pian"("photograph" in English) **301** as an example, its full syllable or initial consonant syllable representation can be inputted as "ZhaoPian", "Zhao Plan", "Zh Pian", "Zhao P" or "Zh P", so, its corresponding numeric code sequences include "94267426", "9426 7426", "94 7426", "9426 7" and "94 7". There are more numeric code sequences if fuzzy syllables are taken into account. Certainly, phrases of different pronunciation may map to a same numeric code sequence.

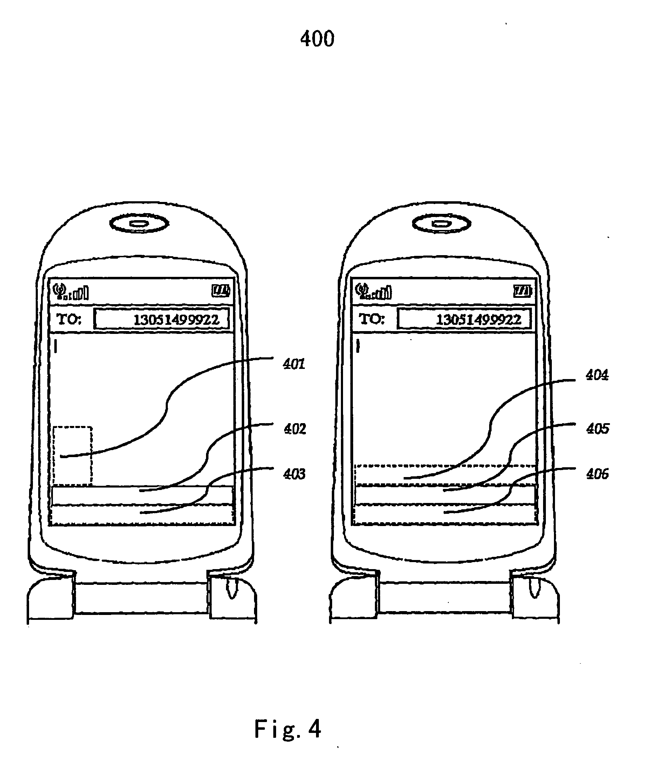

III. The basic interface styles and three primary interaction statuses of the inventive input method. Fig. **4** is a schematic diagram for two basic styles of the input method interface, in which input-and-edit window **402** and **405,** candidate selection window **403** and **406** and syllable-confirming window **401** and **404** are included and correspond to the three primary interaction statuses, i.e. an interaction status of input-and-edit, a interaction status of candidate selection, a interaction status of syllable-confirming, respectively.

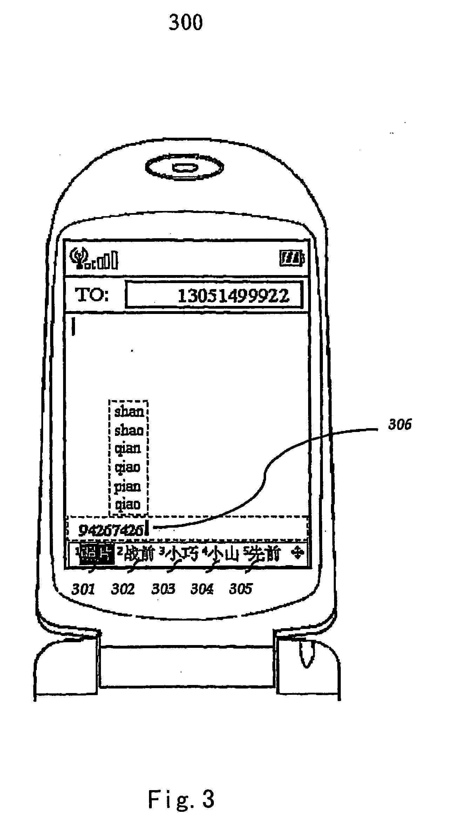

IV. Fig. **3** is a schematic diagram **300** for mixed phrase candidates corresponding to an inputted numeric keystroke sequence. After receiving an input sequence, such as "94267426" **306,** the processor **106** searches the numeric code sequences of each phrase in the memory **116** and mixes together all multi-character phrases and single-character phrases, which match "94267426" but possibly have different pronunciation, as candidates, for example, " 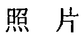 photograph_ZhaoPian_94267426" **301,** " 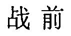 prewar_ZhanQian_94267426" **302,** " 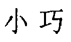 tiny_XiaoQiao 94267426" **303,** " 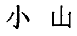 hill_XiaoShan_94267426" **304** and " 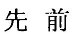 previous_XianQian_94267426" **305.** These candidates are sorted according to candidate length priority and usage frequency priority, and then presented in candidate window on a page-by-page basis. In this way, a user can choose a phrase candidate directly from candidate window without choosing or confirming the Pinyin or Zhuyin syllable corresponding to the numeric keystroke sequence. In this figure, the input sequence is shown as numeric string itself, while the preferred way is to display Pinyin string or Zhuyin string corresponding to a hotspot candidate to provide more perception that is intuitive for the user.

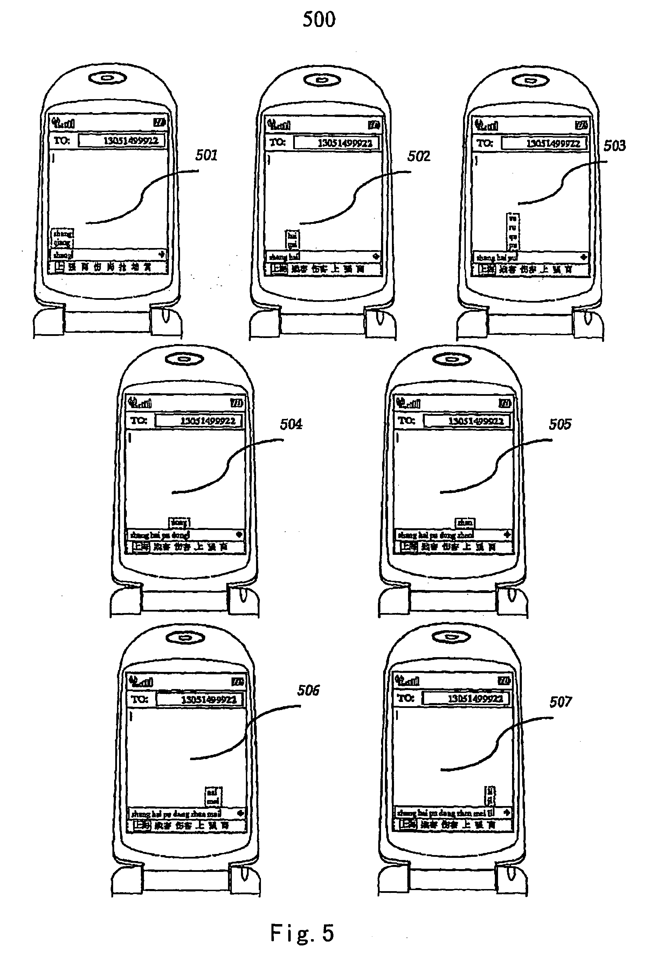

V Fig.**5** is a schematic diagram for consecutive input-and-edit interaction procedure **500.** If the user wants to enter a desired sentence consisting of seven Chinese characters, he or she only needs to consecutively enter corresponding numeric code strings with or without syllable delimiter in the order as listed in **501, 502, 503, 504, 505, 506** and **507.** Without any consideration of Pinyin or Zhuyin corresponding to respective numeric code string, the inputting procedure will not be interrupted by syllable-confirming interaction and becomes more consecutive.

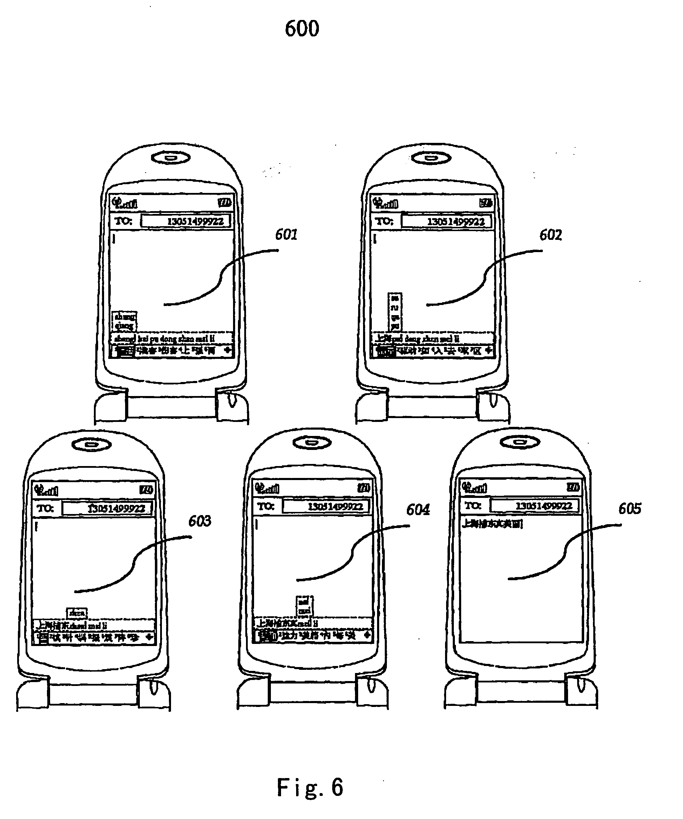

VI. Fig.**6** is a schematic diagram for interaction procedure of consecutive candidate selection **600.** Take the input sequence of the numeric code strings shown in Fig.5 as an example. After the entry into the interaction status of candidate selection, multi character or single character Chinese phrases **601, 602, 603** and **604** are successively chosen with direction keys, numeric keys and OK key, and the Chinese character is displayed in the input-and-edit window every time the selection is made. The whole content of the desired Chinese sentence is committed to an application **605** upon the completion of the candidate selection procedure.

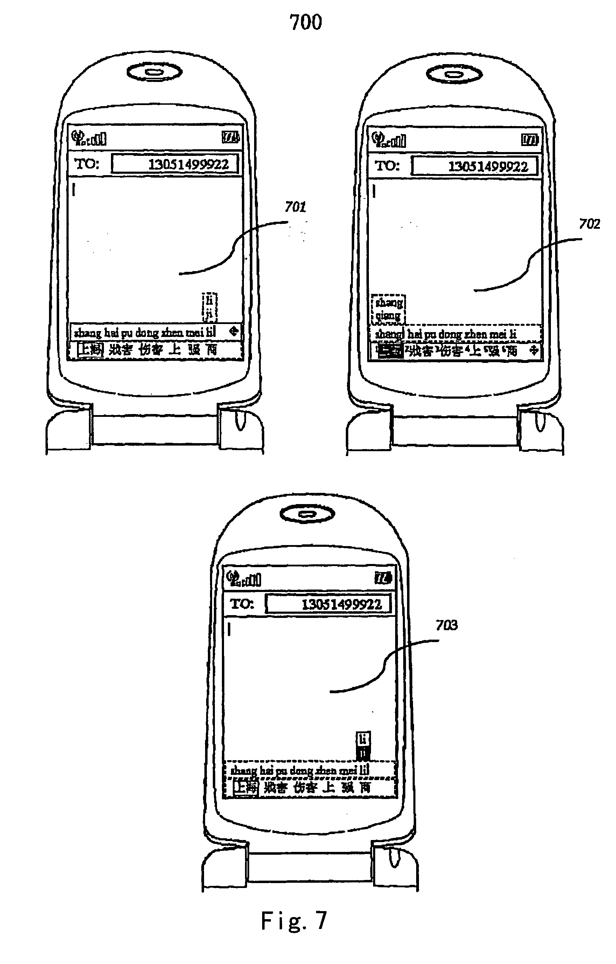

VII. Fig.**7** is a schematic diagram for status switching **700.** After inputting the numeric keystroke for one or more desired Chinese characters, the switching among three statuses of the input-and-edit interaction, the candidate selection interaction and the syllable-confirming interaction in the input method is realized with a group of status switching keys specifically defined as follows:
The status switching key for switching from the interaction status of input-and-edit **701** to the interaction status of syllable-confirming **703** corresponds to one same direction key on a keypad as that for switching from the interaction status of candidate selection 702 to the interaction status of syllable-confirming **703,** and the preferred scheme is to use the up direction key **224;**
In the interaction status of input-and-edit **701,** define two direction keys opposite to each other to enter the interaction status of syllable-confirming **703** and the interaction status of candidate selection **702,** respectively. The preferred scheme is to use the up direction key **224** for the former and the down direction key **226** for the latter, since such arrangement conforms to the on-screen position relation among the input-and-edit window **402, 405,** the candidate selection window **403, 406** and the syllable-confirming window **401, 404** and facilitates user's understanding;
In both of the interaction status of syllable-confirming **703** and the interaction status of candidate selection **702,** the same escape key is defined to quit from above two statuses and return to input-and-edit interaction status **701,** and the preferred scheme is to use C key **229.**

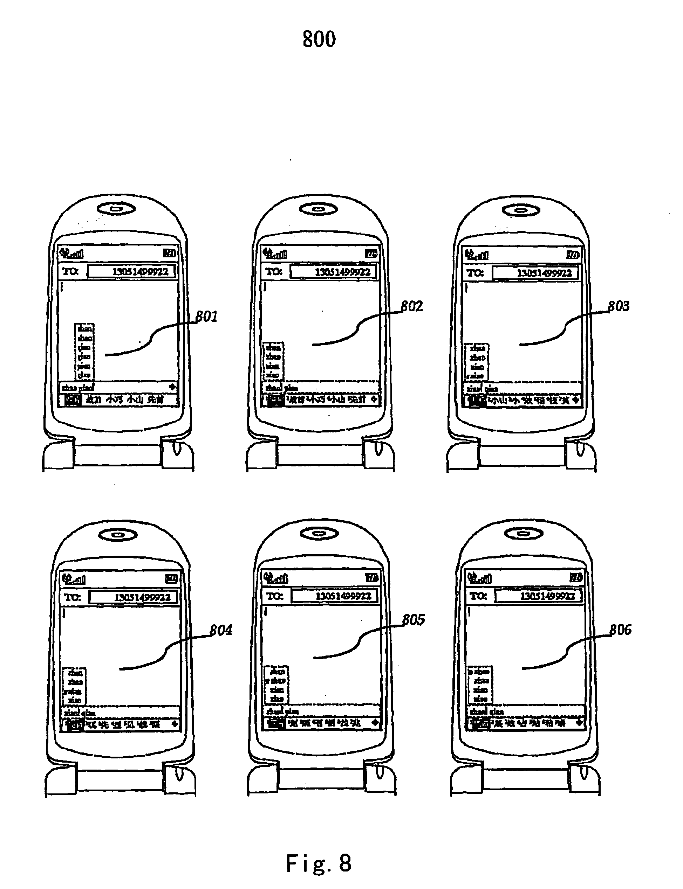

VIII. Fig.**8** is a schematic diagram for initial syllable grouping **800.** At **801,** five phrases of different pronunciation are listed in the candidate selection window, and the processor **106** divides these phrase candidates into four "candidate initial syllable subgroups" according to the pronunciation of the first Chinese character in each phrase. After switching to interaction status of candidate selection **802,** once the cycling key for initial syllable subgroup is pressed, the candidate list is adjusted to the first candidate initial syllable subgroup **803.** Accordingly, the candidate list is adjusted to the second, third and forth subgroups **804, 805, 806** in the order that the cycling key is pressed for the two, three and four times. When the cycling key is pressed for the fifth time in the case of **806,** the candidate list returns to the first candidate initial syllable subgroup **803.** In this way, it is possible for the user to rapidly adjust a candidate to certain candidate subgroup, and thereby narrowing down and speeding up the selection. The preferred arrangement for the cycling key is to use the same key as syllable delimiter key.

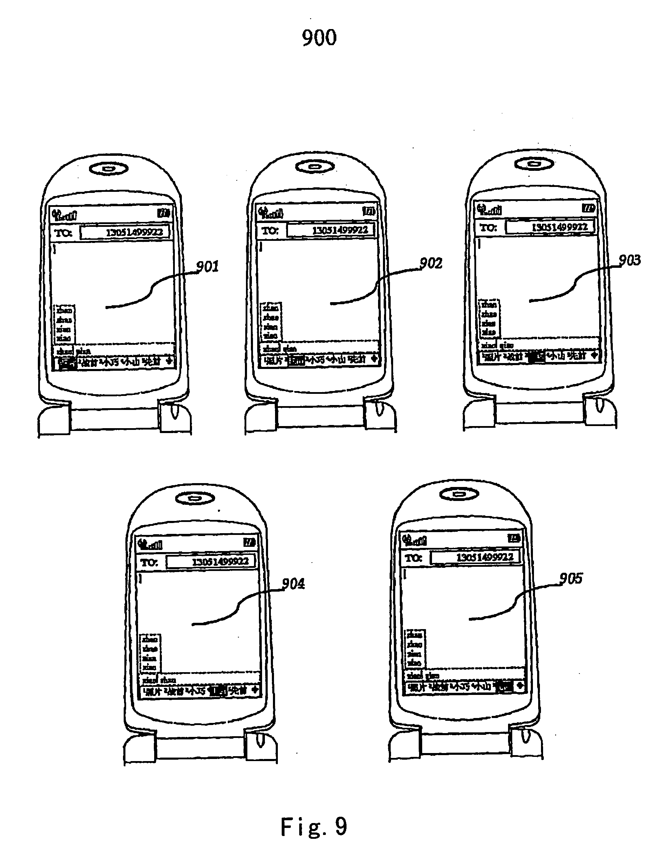

IX. Fig.**9** is a schematic diagram for automatic linkage **900** rule between the hotspot candidate and corresponding syllable string. There exists and only exists one hotspot candidate, such as the first phrase candidate **901** in the candidate selection window. If the user has not confirmed Pinyin or Zhuyin string of the corresponding numeric keystroke sequence, the corresponding Pinyin or Zhuyin in the input-and-edit window is displayed as consistent with the pronunciation of the "hotspot candidate" **901.** Changing the hotspot candidate in the candidate selection window will result in automatic linkage of corresponding Pinyin or Zhuyin in the input-and-edit window. For example, when the default candidate is successively alternated as **902, 903, 904** and **905** with the right direction key **225,** the syllable string in the input-and-edit window is automatically linked and alternated.

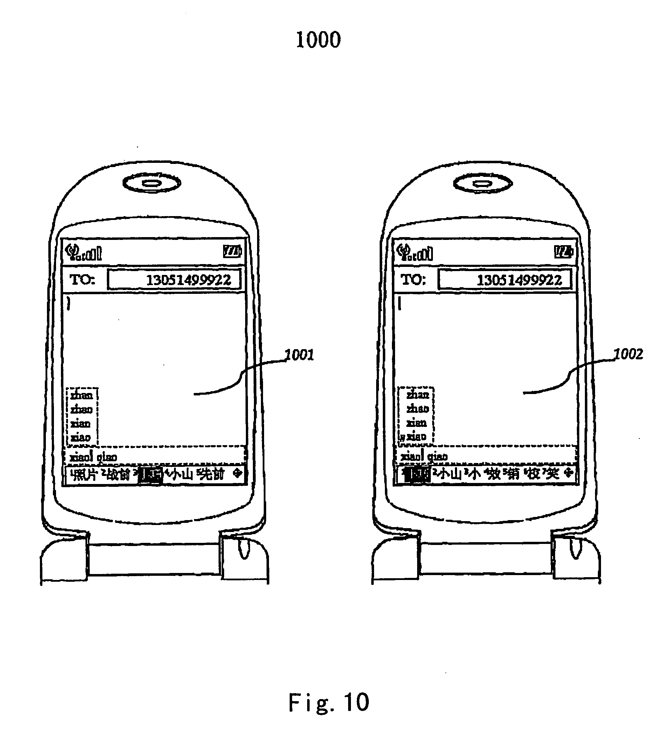

X. Fig.**10** is a schematic diagram for determining syllable by character **1000.** At **1001,** the current hotspot candidate is the third one. When the user presses the assigned key for determining syllable by character, the processor adjusts rapidly the default candidate list to corresponding candidate initial syllable subgroup **1002** according to the pronunciation of the first Chinese character in the hotspot candidate, and thereby narrowing down and speeding up the selection. The preferred arrangement is to set numeric key "9" as the function key for determining syllable by character.

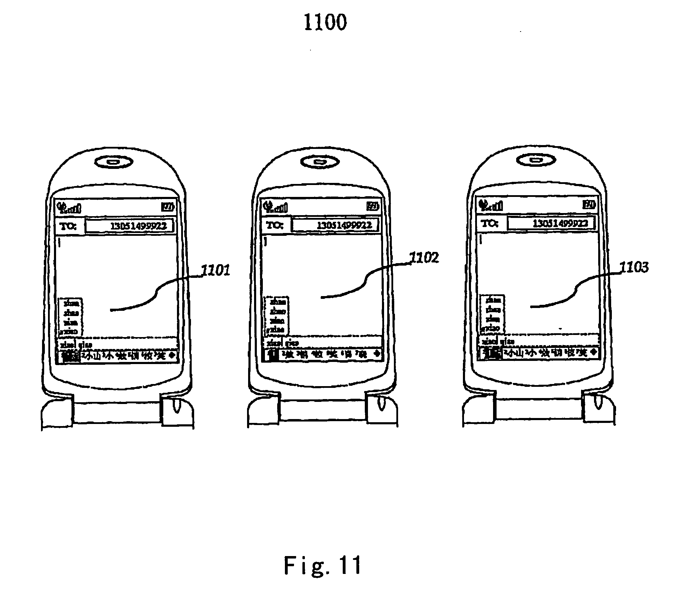

XI. Fig.**11** is a schematic diagram for candidate-length subsegment switching **1100.** The processor **106** divides all candidates into two subsegments, one "multi character phrase candidate subsegment" and one "single character candidate subsegment", according to its number of the Chinese character. In the principle of phrase candidate priority, the phrase candidate subsegment **1101** is presented in the front of candidate list window by default. The left direction key **227** is specially defined as a key for switching between character candidate priority and phrase candidates priority in the interaction status of candidate selection. Once the left key **227** is pressed, it is switched to a character candidate priority mode, that is, the "single character candidate subsegment" **1102** is displayed in the front, and if the left key is pressed again, it is returned to a phrase candidate priority mode **1103, 1101.** In this way, the user can rapidly alternate the list order of the two subsegments, thus narrow down and speed up the selection. The candidate-length subsegment switching function of the left direction keys takes effect only when the first candidate page is listed in the candidate window and the hotspot candidate is the first one.

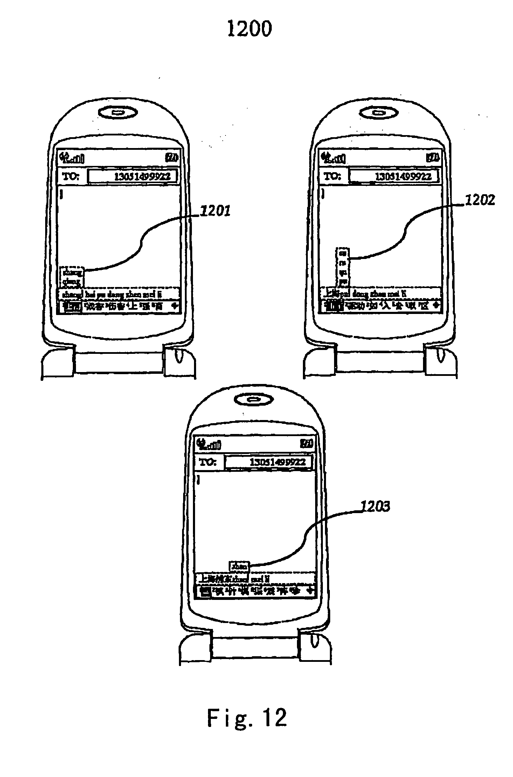

XII. Fig.**12** is a schematic diagram for automatic alteration the syllable-confirming window after a candidate selection operation **1200.** In the case of receiving a numeric keystroke sequence which represents of several desired Chinese characters, if at least one Pinyin or Zhuyin syllable left after a candidate selection operation, the processor **106** will automatically display a syllable-confirming window which contains syllable options corresponding to the prefix part of the remaining user keystroke sequence., For example, the syllable-confirming window corresponding to the first numeric code string is displayed at 1201, and the syllable-confirming window corresponding to the third numeric code is displayed at **1202** after two characters have been chosen. Accordingly, when two more characters are chosen, display the syllable-confirming window corresponding to the fifth numeric code **1203.**

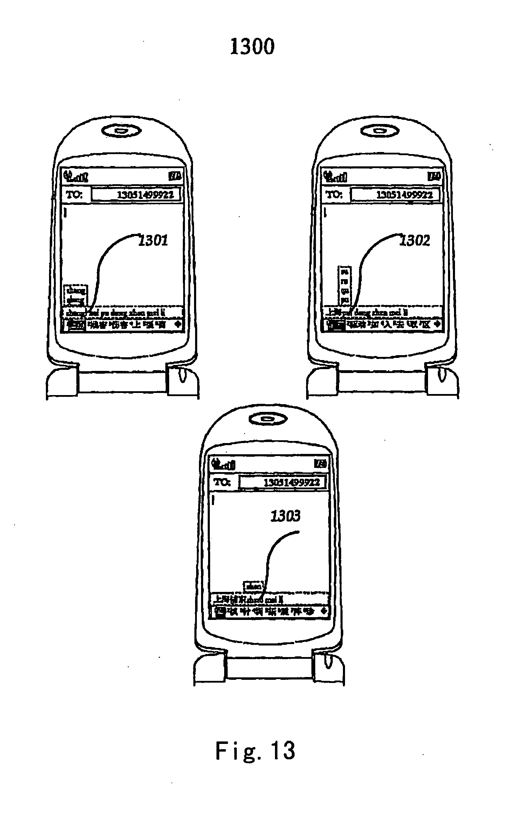

XIII. Fig.**13** is a schematic diagram for automatic shift the caret point in the input-and-edit window after a candidate selection operation. In the case of receiving a numeric keystroke sequence which represents of several desired Chinese characters, if at least one Pinyin or Zhuyin syllable left in input-and-edit window after a candidate selection operation, the processor **106** will automatically shift the caret point to the back of the first phonetic syllable left in the input-and-edit window, For example, the caret point is behind the first syllable string "shang" at **1301,** and after two characters have been chosen, the caret point is shifted to the back of third syllable string "pu" at **1302.** Accordingly, when two more characters are chosen, the caret point is shifted to the back of fifth syllable string "zhen" at **1303.** The advantage of placing the caret point behind the first remaining syllable string rather than before it or at any other position is that, if the user finds this syllable string has been enter incorrectly, it can be deleted and then corrected more quickly.

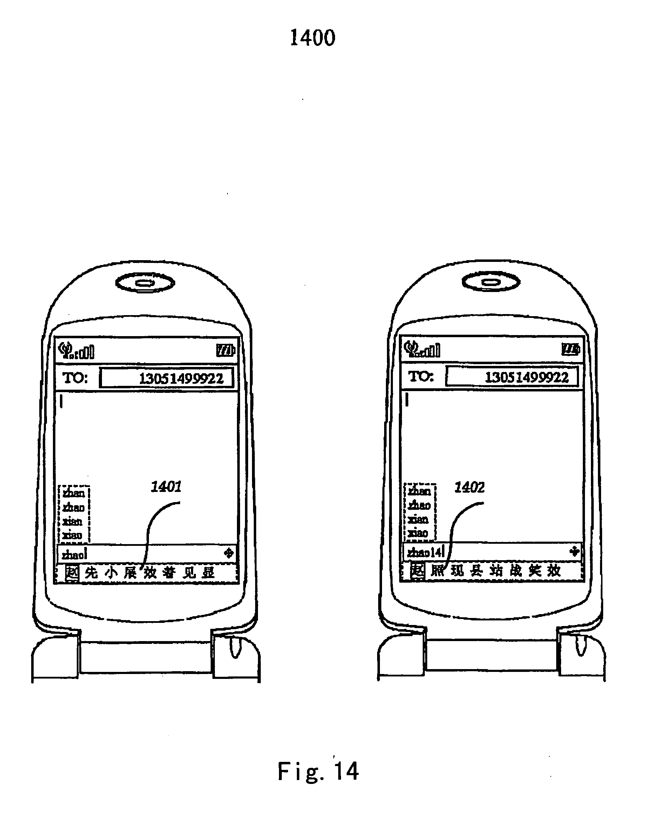

XIV Fig.**14** is a schematic diagram for candidate limitation by equal-length candidate filtering code keystroke **1400.** Based on Chinese character's pronunciation characteristic, shape characteristic or the combination of pronunciation and shape characteristic, define one or more sets of equal-length filtering codes, while use only one set of filtering code to narrowing down candidates. Filtering codes for different Chinese characters have the same code length, the same number of corresponding keystrokes, which is two or three, and the same first corresponding key. For example, could define several sets of filtering code as follows, and the invention is not limited to these sets. Filtering code "11, 12, 13, 14, 15" or "01, 02, 03, 04, 05" can be used to represent pronunciation tones for Chinese characters, Level Tone, Rising Tone, Fall-rise Tone, Falling Tone and Neutral Tone, respectively; or filtering code "11, 12, 13, 14, 15" can be used to represent the first stroke of a Chinese characters, Horizontal Stroke "---", Vertical Stroke "l", Right-Slanting Stroke " 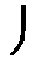 ", Left-Slanting Stroke " 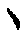 "and Turning Stroke " 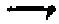 ", respectively; or filtering code "16, 17, 18, 19, 10" can be used to represent the last stroke of a Chinese characters, Horizontal Stroke, Vertical Stroke, Right-Slanting Stroke, Left-Slanting Stroke and Turning Stroke, respectively; or filtering code "11, 12, 13, 14" can be used to represent the shape structure of Chinese characters, left-right structure, top-bottom structure, surrounding structure and independent character structure, respectively. The use can select one set from the above exemplary sets of filtering code. For example, filtering code "11, 12, 13, 14, 15" are used to represent correspondingly the pronunciation tones for Chinese characters. When the desired Chinese character desired by the user doesn't appear on the first candidate page, and equal-length filtering code has not been entered yet at **1401,** once the filtering code "14" is entered to limit the candidate pronunciation to "Falling Tone", any Chinese character which cannot fulfill this requirement will be filtered out or placed at the end of the candidate window, while the position of the Chinese character conforming to the requirement will be shifted forward in candidate window, e.g., the Chinese character " 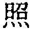 " in the candidate window is shifted forward to the first page of the candidates at 1402. In this way, the selection can be narrowed and accelerated. The equal-length filtering code brings such benefit that it is easy and simple to remember and the software processing is simplified in a keypad fashion.

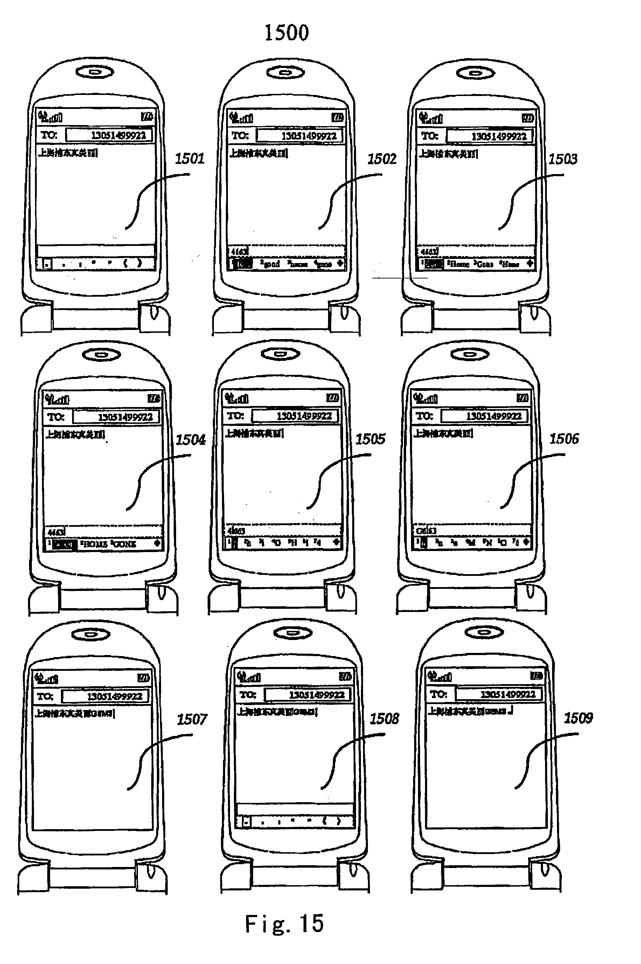

XV. Fig.**15** is a schematic diagram for a mixed input auxiliary status **1500.** The user often needs to input collectively capital-and-lower-case Western letters and words, numerals and symbols in the form of Pinyin or Zhuyin. Certain key can be defined as "mixed input status initial key", and the preferred arrangement is to define one of "1" key, "0" key and "*" key as the mixed input status initial key. When no numeric keystroke corresponding to any Pinyin or Zhuyin is inputted, once the initial key is pressed, Pinyin or Zhuyin input method is switched to mixed input auxiliary status in which capital-and-lower-case Western letters and words, numerals and symbols can be inputted, and automatically returns to a Pinyin or Zhuyin input primary status at the end of above mixed inputting. In the case of being switched to the mixed input auxiliary status without pressing any more numeric key, In the case of entering the mixed input auxiliary status without pressing any numeric key, Chinese punctuation is listed in a candidate window **1501** on a page-by-page basis such that a punctuation can be immediately chosen; if a numeric keystroke is inputted after entering the mixed input auxiliary status, all the Western words corresponding to the numeric string are listed in the candidate window along with the numeral itself at **1502, 1503** and **1504,** the user can select one word or numeral from the candidate window and confirm it directly. Further, a user defined Western string can be customized after entering the mixed input auxiliary status in such a manner that, user firstly enters a numeric string "4663" in the mixed input auxiliary status at **1505,** lower-and capital-case Western letters, numeral and symbols corresponding to each key in the numeric string will be successively listed in the candidate window. After lower or capital case Western letters, numeral or symbols are chosen one by one at **1505** and **1506** to form a customized Western string "G6M3" at **1507,** add the customized string "G6M3" to a user defined word library, and then automatically returns to the Pinyin or Zhuyin input primary status. Therefore, when the same numeric string "4663" is inputted in the mixed input auxiliary status again, the customized Western string "G6M3" will appear in the candidate window. If the user wants to enter the mixed input status to input punctuation " 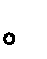 " again, he or she can press the mixed input initial key again at **1508** and then choose punctuation " 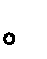 " from the candidate list at **1509**.

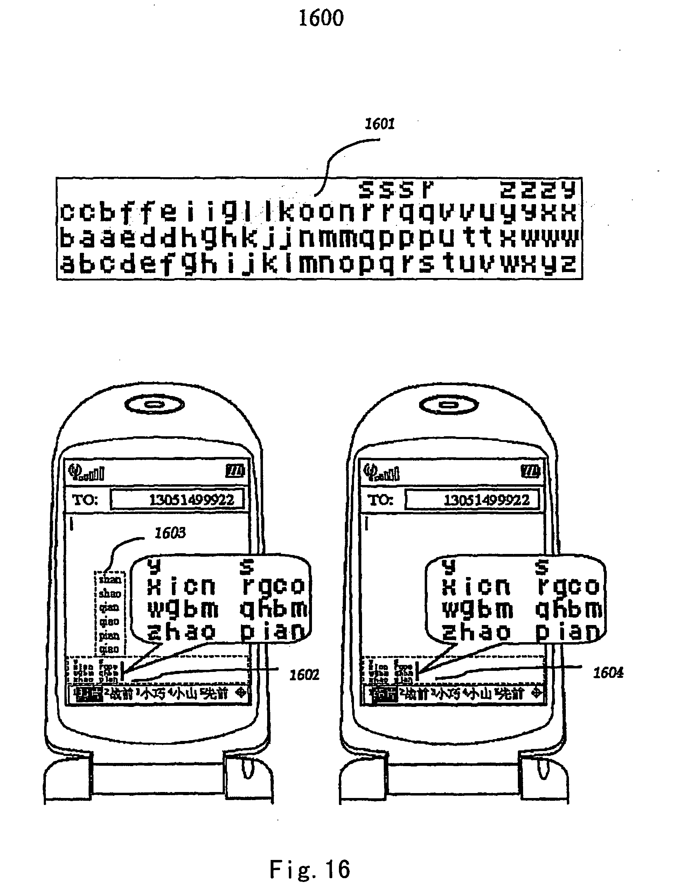

XVI. Fig.**16** is a schematic diagram for using small pictograms with visual emphasis to represent user keystrokes intuitively **1600.** Enhancing the friendliness of the interface between user and machine by using small pictograms with visual emphasis to represent user keystrokes intuitively, since one numeric keystroke may correspond to a plurality of effective Pinyin letter or Zhuyin symbol. When the user presses one numeric key corresponding to the syllable phonetic of a Chinese character, the processor displays one corresponding small pictogram with a visual emphasis part. The pictogram depicts at least two of numeral, Pinyin letters and Zhuyin symbols represented by the numeric key, and the visual emphasis part should be one Pinyin letter or one Zhuyin symbol corresponding to the numeric key **1601,** for example, the pictogram and its enlarged version shown at **1602** and **1604.** With the presence of a pictogram, hide the syllable-confirming window **1603** could reduce window interface size.

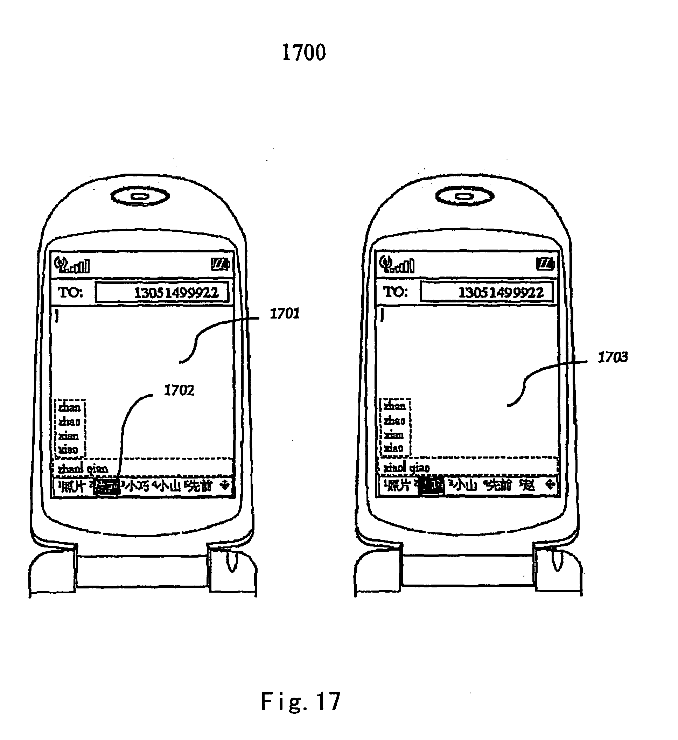

XVII. Fig.**17** is a schematic diagram for user-defined phrase deletion **1700.** Define a numeric key as user-defined phrase deletion key in the interaction status of candidate selection, and the preferred arrangement is to define numeric key "8" as the deletion key. Certainly, this arrangement means maximum seven candidates be list at same time. At **1701,** assuming that the second phrase candidate " 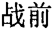 " **1702** is a user-defined phrase and also the current default candidate, when the user presses the deletion key, the processor **106** will delete the phrase from the memory **116,** and subsequently, the content in the candidate window is alternated accordingly at **1703.**

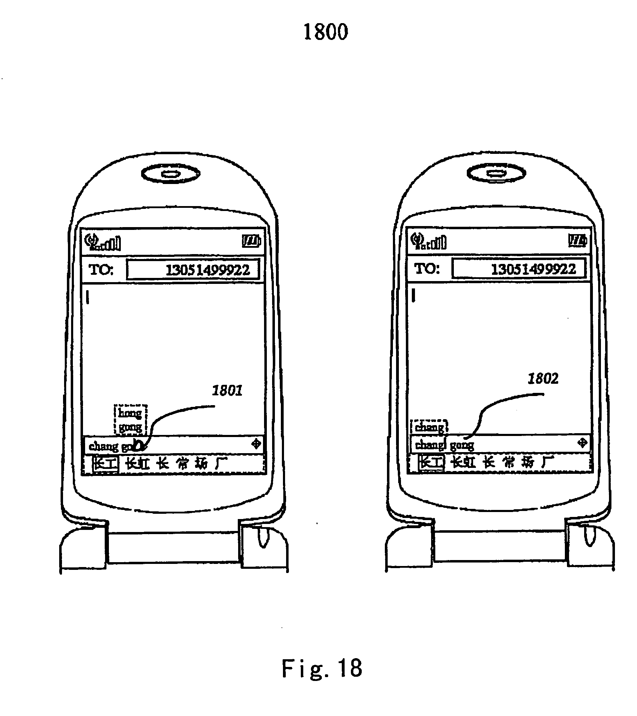

XVIII. Fig.**18** is a schematic diagram for automatic supplementation of non-full numeric code **1800.** At **1801,** "46" is a non-full numeric code and does not correspond to any Pinyin string. The closest full numeric code string for "466" is "4664", to which the Pinyin syllable strings "gong" and "hong" correspond. In the interaction status of input-and-edit, if the user presses the left direction key **227** to leave the current operating position, the processor **106** automatically supplements "466" into the closest full numeric code string "4664" and display the corresponding syllable string in the input-and-edit window.

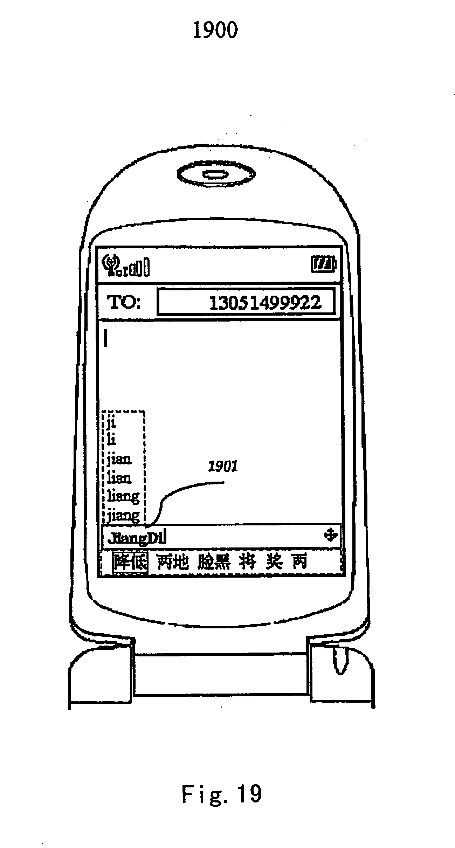

Fig.**19** is a schematic diagram for automatic division of a consecutive numeric keystroke sequence having no syllable delimiter **1900.** If the user enters a numeric keystroke sequence without syllable delimiter, for example, "5426434", the processor **106** enumerates all potential division paths from the sequence's beginning to the end according to the rule of Pinyin syllable table, and then finds a division path having minimum path segments. In this example, the division paths include at least the following three paths of "54 264 34" (e.g. "Ji Ang Di", "Li Ang Di"), "5426 434" (e.g. "Jiao Gei", "Jian Gei", "Liao Gei", "Jian Hei") and "54264 34" (e.g. "Jiang Di", "Liang Di", "Jiang Ei"), the division path having minimum path segments actually includes "5426 434" and "54264 34", and the lengths of the these path segments are not completely equal to each other. So the processor **106** selects a preferred division path according to the length and the usage frequency of a phrase candidate corresponding to each path in the following approach: firstly, calculate the number of Chinese characters in the longest phrase candidate corresponding to a division path, if the number is greater than that of any other path, the path is selected. In this example, however, the longest phrases corresponding to "5426 434" and "54264 34", respectively, each have two Chinese characters. In such case, the path corresponding to a phrase of the highest usage frequency is selected, that is, since one of the phrases corresponding to "54264 34" ("Jiang Di 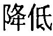 ") has a higher usage frequency than any of the phrases corresponding to "5426 434" ("Lian Hei 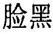 " "Jiao Gei 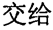 "), so, "54264 34" is listed as the default path division, and the corresponding syllable string is displayed in the input-and-edit window. The displayed syllable string contains no syllable delimiter at **1901** since the user has not entered. The preferred display form is to capitalize the initial letter of the syllable.

## Claims

1. A numeric coded Pinyin and Zhuyin multi-character input method on a reduced keypad, the method comprising:
(a) according to full syllable or initial consonant of a syllable inputting rule, each Chinese phrase in library is mapped to corresponding numeric code sequences based on the mapping relation between Pinyin letters or Zhuyin symbols and numeric key, and phrases of different phonetic pronunciation may be mapped to a same numeric code sequence;
(b) in the case of consecutively receiving a numeric keystroke sequence which represents of several desired Chinese characters, while user has not yet selected or confirmed any syllable string corresponding to any part of the keystroke sequence, the processor searches phrase's numeric code sequence to determines whether it matches the whole or the prefix of the numeric keystroke sequence, all these matched phrase candidates are mixed together regardless of whether or not their phonetic pronunciation is the same, and part or all of the phrase candidates are then presented in candidate list window.

2. The input method of mixed phrase candidates, further comprises a candidate grouping rule by its initial syllable, the processor decomposes mixed phrase candidates into one or more "candidate initial syllable subgroups" in such a manner that, if the Pinyin letter strings or Zhuyin symbol strings corresponding to the first Chinese character of some candidates are the same at the time of input, these candidates are classified into one and the same subgroup without considering whether or not the second or subsequent Chinese characters have the same pronunciation.

3. The input method of claim 2, further comprises a specially defined cycling key for wherein said initial syllable subgroup, and once the cycling key is pressed, the candidate list is adjusted to a corresponding initial syllable candidate subgroup.

4. The input method of claim, 1, for wherein matched candidates, further comprises a candidate-length subsegment priority switching method in such manner that the processor divides all candidates into two subsegments, "multi character phrase candidate subsegment" and "single character candidate subsegment", according to its number of the Chinese character, and present phrase candidates in the front of candidate window by default, once the left direction key is pressed in interaction status of candidate selection, candidate list is switched to character priority mode and single character candidate subsegment is firstly displayed, and if the left direction key is pressed again, candidate list is returned to phrase candidate priority mode.

5. The input method of claim 1, wherein, after receiving an equal-length candidate filtering code keystroke entered by the user, said processor limits the Chinese character characteristic based on the filtering code, and only the candidate that fulfills the filtering limitation is displayed in the candidate window.

6. The input method of claim 5, wherein the said filtering codes for different Chinese characters have the same code length, the same number of corresponding keystrokes which is two or three, and the same first corresponding keystroke.

7. The input method of claim 1, wherein if the user has not confirmed any Pinyin or Zhuyin syllable corresponding to any part of the numeric keystroke sequence, and once the hotspot candidate in the candidate window is alternated, said processor will start the automatic linkage of Pinyin or Zhuyin syllable displayed in input-and-edit window such that the corresponding Pinyin or Zhuyin string is consistent with the pronunciation of the hotspot candidate.

8. The input method of claim 1 or 2, further comprising:
A key for determining syllable by the first character in hotspot candidate is specifically defined, once the key is pressed in the interaction status of candidate selection, the processor rapidly adjusts the candidate list to an initial syllable candidate subgroup which corresponds to the pronunciation of the first Chinese character in the hotspot candidate

9. The input method of claim 1, wherein define a numeric key is specifically as user-defined phrase deletion key in the interaction status of candidate selection, once the key is pressed, if the current hotspot candidate is a user-defined phrase, the processor will delete the phrase from the phrase library or memory.

10. The input method of claim 1, wherein a set of small pictograms with visual emphasis is used to intuitively represent user keystrokes, while the pictogram should depict at least two of numeral, Pinyin letters and Zhuyin symbols represented by the numeric key, and the visual emphasis part should be one Pinyin letter or one Zhuyin symbol corresponding to the numeric key.

11. The input method of claim 1, wherein in input-and-edit status, if the numeric string at the current caret point is only a prefix of a full numeric code instead of a full numeric code, the processor will automatically supplement the numeric string into a fall numeric code sequence upon the departure from the current caret point.

12. The input method of claim 1, wherein in the case of receiving a numeric keystroke sequence which represents of several desired Chinese characters, if at least one Pinyin or Zhuyin syllable left in input-and-edit window after a candidate selection operation, the processor will automatically shift the caret point to the back of the first phonetic syllable left in the input-and-edit window.

13. The input method of claim 1, wherein in the case of receiving a numeric keystroke sequence which represents of several desired Chinese characters, if at least one Pinyin or Zhuyin syllable left after a candidate selection operation, the processor will automatically display a syllable-confirming window which contains syllable options corresponding to the prefix part of the remaining user keystroke sequence.

14. The input method of claim 1, wherein the input method supports that that no syllable delimiter keystroke is required between two phonetic syllables, after receiving such a numeric keystroke sequence which represents of several desired Chinese characters containing no syllable delimiter, the processor enumerates all potential division paths from the sequence's beginning to the end according to the rule of Pinyin or Zhuyin syllable table, and then finds a division path having minimum path segments as an optional path.

15. The input method of claim 1, wherein when no numeric keystroke sequence representing any Pinyin or Zhuyin is inputted, one numeric key is defined as mixed input status initial key, once the initial key is pressed, the input method enters directly into a mixed input auxiliary status in which capital-and-lower-case Western letters and words, numerals and symbols can be inputted, and automatically return to a Pinyin or Zhuyin input method primary status at the end of the above mixed inputting.

16. The input method of claim 3, wherein said cycling key for initial syllable subgroup is the same physical key as the input key for Pinyin or Zhuyin syllable delimiter.

17. The input method of claim 1, wherein after entering the numeric keystroke for one or more Chinese characters, the switching among three statuses of interaction status of input-and-edit, interaction status of candidate selection and interaction status of syllable-confirming in the input method is realized according to the following scheme:
(1) the key for switching from the interaction status of input-and-edit to the interaction status of syllable-confirming is one same direction key on a keypad as that for switching from the interaction status of candidate selection to the interaction status of syllable-confirming;
(2) In the interaction status of input-and-edit, two direction keys which opposite to each other are used to enter the interaction status of syllable-confirming and the interaction status of candidate selection, respectively;
(3) in both of the interaction status of syllable-confirming and the interaction status of candidate selection, define one and the same escape key to quit from above two statuses and return to input-and-edit interaction status

18. The input method of claim 14, wherein if there are more than one division path having minimum path segments, and the length of each path segments of one division path are not completely equal to that of another path, the processor will select a preferred division path according to the length and the usage frequency of a phrase candidate corresponding to each path in such a way that, if the number of Chinese characters in the longest phrase candidate corresponding to a division path is greater than that of any other, the path is selected, and if these longest phrase candidate have the same number of Chinese characters, a path corresponding to a phrase with the highest usage frequency is selected.

19. The input method according to Claim 15, wherein in the case of entering the mixed input auxiliary status without pressing any numeric key, Chinese punctuation is listed in a candidate window ; and
if a numeric keystroke is inputted after entering the mixed input auxiliary status, all the Western words corresponding to the numeric string are listed in the candidate window along with the numeral itself.

20. The input method of claim 15, wherein if a numeric string is inputted in the mixed input auxiliary status, lower and capital case Western letters, numerals and symbols corresponding to each key in the numeric string will be successively listed in the candidate window, after these letters, numeral or symbols be chosen one by one to form a customized Western string, the customized string will be added into a user defined word library.
